# EUROPEAN PATENT SPECIFICATION

(11) **EP 4 275 274 B1**
(45) Date of publication and mention of the grant of the patent: **29.04.2026**
(21) Application number: 22703102.8
(22) Date of filing: 05.01.2022
(51) Int. Cl.: H02S 20/24, H02S 30/10, H02S 30/20

(54) **DESIGN FOR THE ATTACHMENT AND PLACEMENT OF A PV-SYSTEM**
DESIGN ZUR BEFESTIGUNG UND PLATZIERUNG EINES PV-SYSTEMS
CONCEPTION DE FIXATION ET DE MISE EN PLACE D'UN SYSTÈME PV

(30) Priority: 06.01.2021 NL 1043899
(43) Date of publication of application: 15.11.2023
(73) Proprietor: Rable Holding B.V., 2627 AN Delft (NL)
(72) Inventor: VAN DEN BOS, Wouter, 2627 AN Delft (NL)
(74) Representative: Patentwerk B.V.
(86) International application number: PCT/NL2022/000001
(87) International publication number: WO 2022/149977

(56) References cited:
- EP-A1- 2 843 320
- WO-A1-2015/074812
- WO-A1-2016/049710
- CN-A- 108 418 533
- CN-B- 108 418 533
- JP-A- 2005 101 103
- US-A1- 2019 006 984
- US-A1- 2019 386 606

## Description

The invention concerns the design for the connection and support of photovoltaic (PV) panels. The design furthermore concerns a mechanism and attachment method of PV-panels.

Similar designs are known, in which the panels are mutually connected via a lower beam which mechanically, or using additional ballast, creates a foundation for the individual PV panels. Generally, the panels are attached to the support structure in the final step and are connected via plugs for the electrification of the PV system. Since current solar panel or PV systems must withstand wind and snow loads, generally additional ballast is added, to prevent "uplift and shift". The large dead weight and the additional loads create a large problem for different types of foundations, for example roofs and/or other foundations, which are not designed to withstand this additional load and possibly require reinforcing.

An additional disadvantage of the current system is the installation time required for the assembly of the individual components on the roof. Besides the physical strain for the installer, caused by the heavy components, it ensures a high throughput time and high costs since such structures are labour intensive. Despite most panels have a dead weight less than 25 kg to fulfil the health and safety legislation, lifting of these panels, with large dimensions and a deadweight of 25 kg, in combination with wind is not ideal. Also, errors can be made quickly in the process of correct cabling and transmitting, since this is executed on the roof with variable weather conditions. Potential connection errors and fire safety are obviously dependent on the ability of the installer, who executes multiple repetitive operations, which increases the risk for human errors.

The Japanese patent publication JP 2005 101103 discloses a solar cell device having plural solar panels vertically connected to a zigzag structure. The height of the vertical zigzag structure is variable, which height variation results in a change of the elevation angles of the light receiving sections of the individual solar panels. The vertical zigzag solar panel construction is attached to a pedestal enabling the solar panel construction to rotate around a vertical axis of rotation, thus influencing the direction towards the light receiving sections of the individual solar panels are facing.

The European patent application EP 2 843 320 A1 discloses a module carrier for several collector modules, such as solar modules or heat storage modules that are arranged in series and aligned at a specific angle. The module carrier relates to a foldable system where the connection elements are substantially connected half way of the side of the collector modules. The connection elements are all designed on tension forces only because they all comprise a rotating joint.

The Chinese patent application CN 108 418 533 A discloses a fast disassembly type rack that is mountable on a care roof to provide a vehicular solar device. The lower part of the rack is provided with several magnet anchorages while the top of the rack is provided with a solar cell panel assembly. The solar cell assembly is foldable using return and torsion springs (9, 10) rendering a flexible structure when unfolded.

Thus, the invention intends to provide in a design which does not have the above-mentioned and/or other disadvantages, or at least partially cancels these, while the advantages thereof are at least partially retained. Furthermore, the invention intends to offer a design and operating principle which simplifies the placement of solar panels, requires less operations and where the functional checks and quality tests can take place in a workshop.

At least one of this and/or other goals is achieved with a PV system according to claim 1.

Hereby the side edges of the panels or frameworks can be connected to the system either to the lower as well as the upper beam with connecting elements capable of carrying tensile and compression forces. Because in the way a spatial truss structure is created, the solar panels or frameworks are part of a lightweight (self-)supporting bending resistant spatial structure.

Hereby the panels and/or frameworks can be mutually (hinged) connected. This enables easy extending and unfolding, where the installation does not have to carry and assemble each panel, and where the electrical connections already can be installed. This can therefore save much installation time. Besides this, since the structure is at least in part self-supporting, de load on the roof can be limited. Furthermore, the panels and/or frameworks can contain two overlying side edges, where the system contains at least two end panels or frameworks and possibly several intermediate panels and/or frame works, where the intermediate panels and/or frameworks on one first side edge are or are not hinge connected with a following panel or framework, and where the end panels or frameworks merely are connected to the first or second side with or the preceding or the next panel or framework.

With this configuration, the system can be completely electrically cabled and is easy to unfold. The installation of the PV system is therefore less physically stressful for the installers.

Hereby the PV system can comprise of a folded and unfolded configuration, and in an unfolded configuration the panels and/or frameworks mutually with adjacent panels and/or frameworks can form an angle.

Since the invention can be easily folded and unfolded and is portable and in folded condition remains compact, the PV system can be easily placed and removed later. (for example for maintenance or to avoid damage by hail)

The panels and/or frameworks can alternatingly be provided with slider, rollers, or wheels on one first side edge or on one second side edge.

Furthermore, the panels and/or frameworks can be alternatingly on one first side or on one second side edge be provided with elements which can primarily be loaded on tension and/or pressure. These elements, executed by for example rods or cables, form a connection from the first side edge of the first panel or framework with the second side edge of an adjacent succeeding panel or framework.

The system can make use of the on the foundation installed rails or guides, wherein, upon which or over which the sliders, wheels or rollers can move. As a consequence, both the surface pressure on the foundation and the frictional resistance during unfolding is reduced, resulting in the execution of the unfolding with less force.

Hereby the side edge of the solar panel can be part of a spatial truss structure. In this way a system can be created, which can consist of a large amount of connected solar panels which can create a spatial truss structure by adding the elements capable of carrying tension and compression loads. With this truss structure the system has a (self)supporting function, whereby the load on the foundation can be reduced.

The invention has specifically more relation in the addition of the tension-compression elements at the top of the side edges of the solar panels, which creates a spatial truss structure. This truss structure can cause for additional bending resistance or bending stiffness of the PV system against wind, water and snow load. With this addition it can be possible to create a span with the spatial truss structure from support point to support point. Commonly the supporting structure of a foundation has points or locations, where extra load can be applied, for instance on a roof near the purlins, (side) walls or support columns, but the bearing strength of the intermediate foundation is insufficient. Because the truss structure does not require additional support points, a bridge can be formed between the load carrying points of the foundation. In case the support points are chosen correctly the upper tension and compression elements exclusively are loaded in tension only and the cross-section can be drastically limited and/or replaced by a "tension-only" element like a cable.

The invention also allows to create a bending resistance connection in the direction perpendicular to the PV system. In this way the load carrying capability of the PV-system is extended with a load carrying capability between several (Parallel) PV-systems.

The bearing feature of the PV system results in the unloading of the weak sections of the foundation and prevents that in certain locations a higher total weight of the PV system and/or anchor to the foundation is required to prevent lift of the PV system by upward forces of the wind.

The invention will be explained in more detail by means of embodiments which are displayed in the drawing. The drawing shows:
figure 1 a schematical side view of a first embodiment of the invention;
figure 2 a schematical side view of a first embodiment of the invention in nearly unfolded and unfolded condition;
figure 3 a schematical perspectival view of a single row of a first embodiment of the invention
figure 4 schematical top view of the system in various embodiments (PV in landscape, PV in portrait)
figure 5 a first embodiment of the invention in "folded" position when this is prefabricated and delivered
figure 6 side view with a detail of the hinge line on the top side of the system according to an embodiments of the invention
figure 7 side view embodiment of the invention with a detail of the hinge line on the lower side of the system where a tension-compression rod will be connected and, in most embodiments, also a wheel and rail figure 8 schematical top view of the connected system according to the embodiment of the invention
figure 9 spatial view below the structure according to an embodiment of the invention

It is to be noticed that the drawings are merely a schematic representation of the preferential embodiments of the invention. The drawing should not be seen as a limitation of the invention. In the figures, equal or corresponding components with corresponding reference numerals are indicated.

The phrase "a PV system" or solar cell system which is used in this specification and/or conclusions should be construed as, is however by no means limited to a series or collection of solar panels or frameworks in which solar panels are to be installed, whereby the system is or is not already equipped with electrical connections and cables.

The expression "stiff" "structurally supporting" or "(self)supporting" which is used in this specification and/or conclusions, should be construed as, is however by no means limited to those elements of a structure which can take a part of the forces and/or loads of the structure. This can for instance be to increase the stiffness and/or strength of structure. Forces can be tension forces, compressive forces, torsional forces, shear forces and/or other forces which can be important forces for the structural integrity.

The expression "roof" or "roofs structure" which is used in this specification and/or conclusions, should be interpreted as, but is by no means limited to a (flat) roof, but can also be a (non-loadbearing) foundation.

The expressions PV panel and solar panel are synonymous and are used interchangeably.

With the expression PV system or PV installation is also meant a connection of PV systems with at least 2 panels.

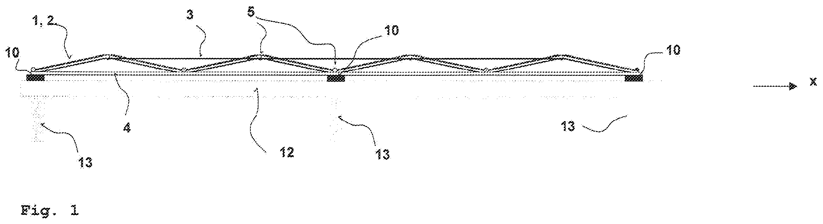

Figure 1 shows a side view of the truss structure of the PV system on a roof. By connecting the PV panels solar panels (1) on both the upper side (3) as well as the lower side (4) using tension-compression elements a spatial truss structure is created. The side edges (2) of the PV panels (1) are part of this truss structure.

The tension or compression elements on the upper side (3) and the lower side (4) are connecting elements. The connecting elements are primarily loaded in tension or compression and can be hinged. If the element is merely loaded in tension, the moment of inertia of the cross-section can remain small or a cable can be used.

Because of the (self) support character of the truss structure, it only has to be connected to the foundation with a limited amount of support points (10). These support points can both be a support point as well as a mechanical fastening such as for example a bolt-screw connection through the roof top (roof anchor). The location of these support points (10) can be chosen in such a way, for instance on top of or in the vicinity of a load bearing point (13), in such a way that the weak foundation (12) is not or only limited loaded. In this configuration the advantage is that the roof or foundation, which usually has insufficient bearing capacity, can still be provided with a PV system. The additional loads, as for example own weight, wind and snow on the PV system are not transferred via de weak section on the roof (12) but via the load bearing points (13). Load bearing points of a roof are for example purlins, (side) walls or support columns.

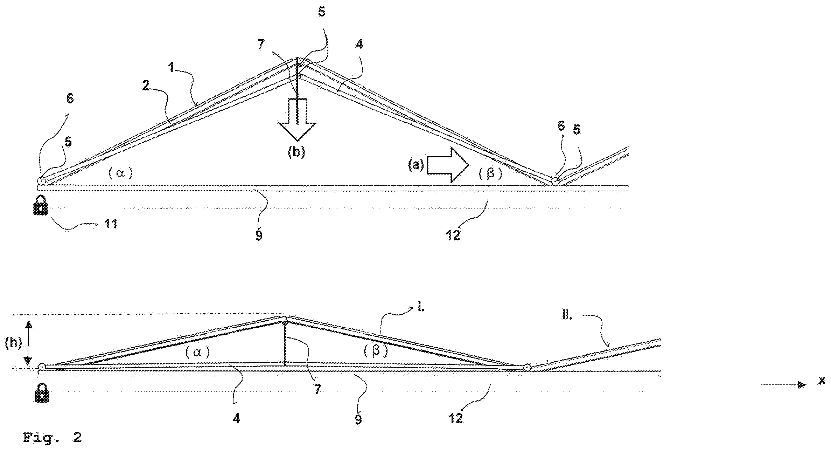

Figure 2 shows the unfolding of the system using hinge points (5) between the solar panels, whereby the rotation is preferably located outside the thickness of the panel. In this way the panels can fold against each other. These hinge points are located on the upper side as well as the lower side of the panel. The tension or compression element on the lower side (4) is hinged in the middle, creating a linkage, whereby the end position and the angles alfa (α) and beta (β) are defined. In the figure the angles alfa (α) and beta (β) are equal, however, this is not necessary, for instance for a so-called north-south orientation these angles are unequal and the PV panels on the north side do not contain photovoltaic cells.

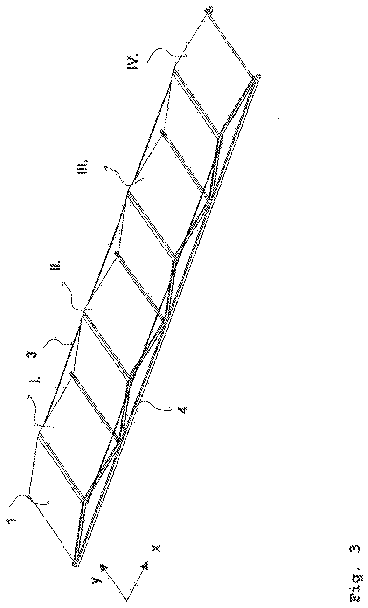

The low (rolling) resistance between the wheels (6) and the guiderail (9) or foundation prevents braking of the unfold movement. If desired, the unfold movement can be slowed down by using sliders or rollers with a higher sliding resistance instead of wheels. Since the mechanism is fixed on one side only a linear movement (a) can be made. This is possible with a multiple of connected pairs (I,II,.....n) of solar panels (see figure 3).

In figure 3 such an unfolded system is shown in a spatial view for PV or solar panels (1) with four mechanically connected pairs (I till IV) which are connected via tension and compression elements (3,4). The in this way created truss structure forms a large self-supporting span in the longitudinal direction (x), with resistance against positive and negative (caused by for instance wind uplift) loads of own weight, wind and snow; the principle of a bridge.

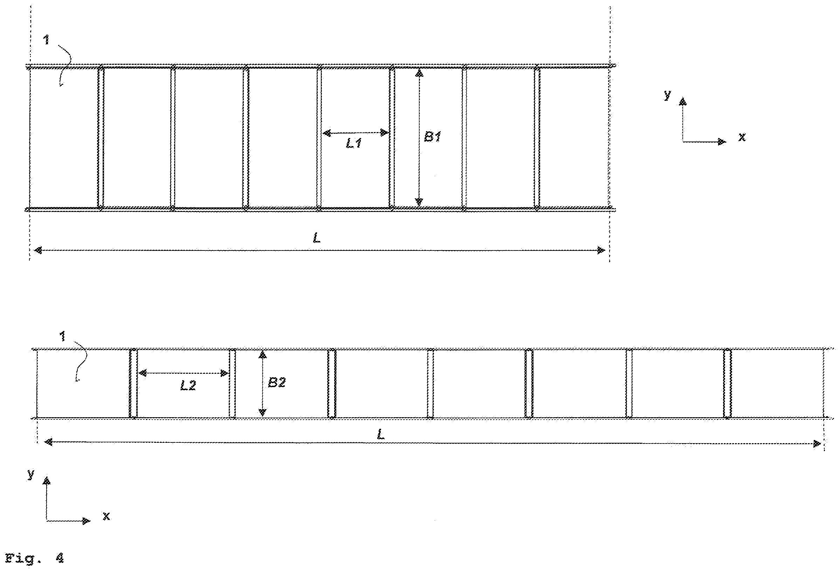

Figure 4 The maximum span L in longitudinal direction (x) is dependent on the orientation of the solar panels (1) and the angle beta (β) determining the height of the truss structure. Increasing height (h) increases the strength or bending resistance of the truss structure. The PV panel generally consists of a panel with photovoltaic solar cells with a frame around (1). A single panel as shown can consist of 1 or more solar panels in either landscape or portrait orientation with a variable final length (L1,L2) and width (B1, B2). Sometimes the protecting frame or side edge (2) is directly integrated in the PV panel.

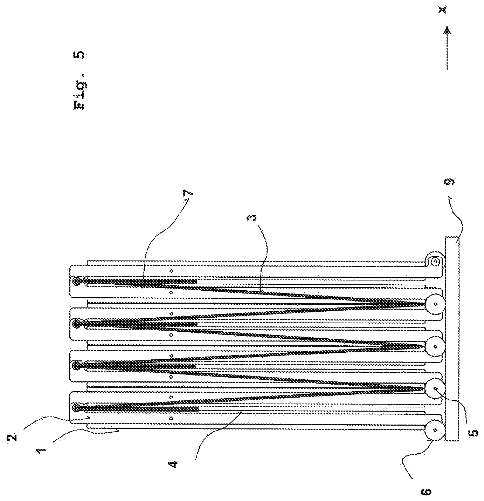

Figure 5 shows a system which is pre-assembled and in folded condition using is positioned on the roof (edge) using a hoisting, lifting or transportation machine, after which it is unfolded in one linear movement. During unfolding the wheels (6) support the system, which directly rides on the foundation or by using a rail (5). A large number of panels can be connected, but for the explanation only 4 connected pairs are drawn.

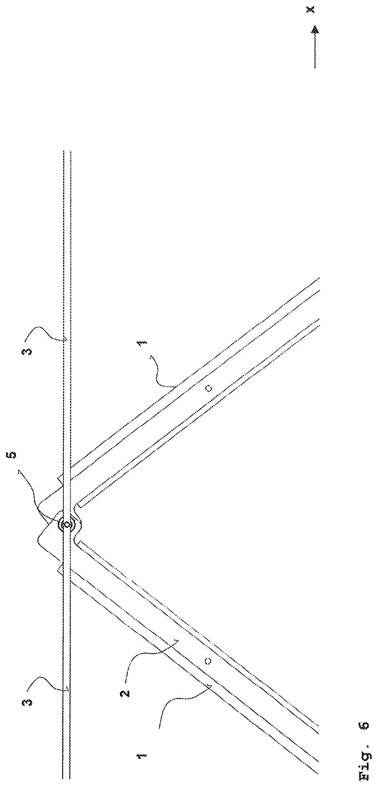

Figure 6 shows a detail of the system, where the frames (2) of the solar panels (1) on the upper side are (hinged) connected (5) and horizontally connected with the upper side tension-compression element (3).

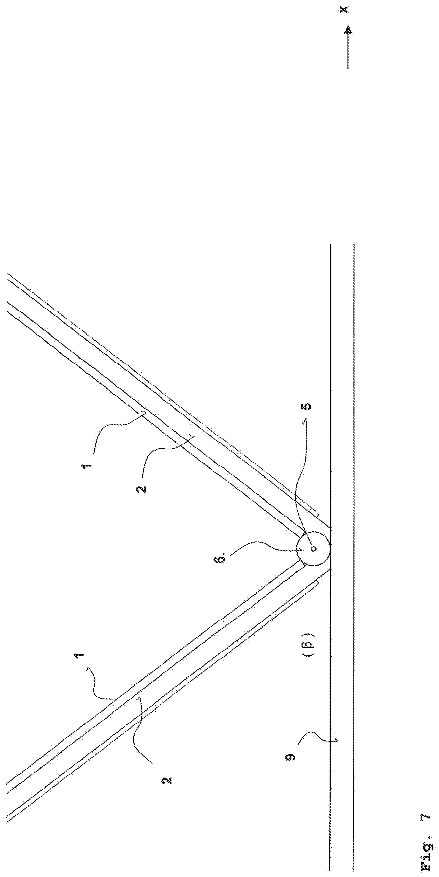

Figure 7 shows a detail of the lower side with hinge point (5) of frame (2) and solar panel (1) equipped with a wheel (6) which rides along the lower beam or rail (9) or directly on to the foundation. During unfolding the angle beta will reduce with the horizontal (the roof surface).

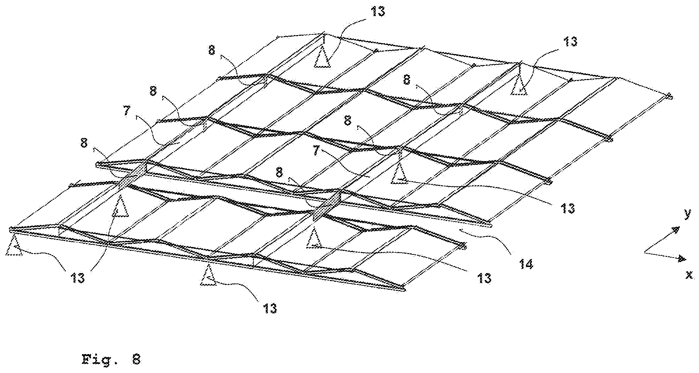

Figure 8 shows a completely connected system in both directions (x,y). By connecting the transverse partitions (7) with connecting elements (8) the system is also connected "stiff" to the adjacent PV system. The final shape of the connecting element (8) depends on the distance between the 2 adjacent PV systems and is larger if space is required between the connected PV panels (14), for example to create a walk path. The figure shows that due to the structurally supporting character of the invention, a PV system can also be installed on a foundation with merely a limited amount of irregularly distributed load bearing points (13) (as is the case with a "weak" roof).

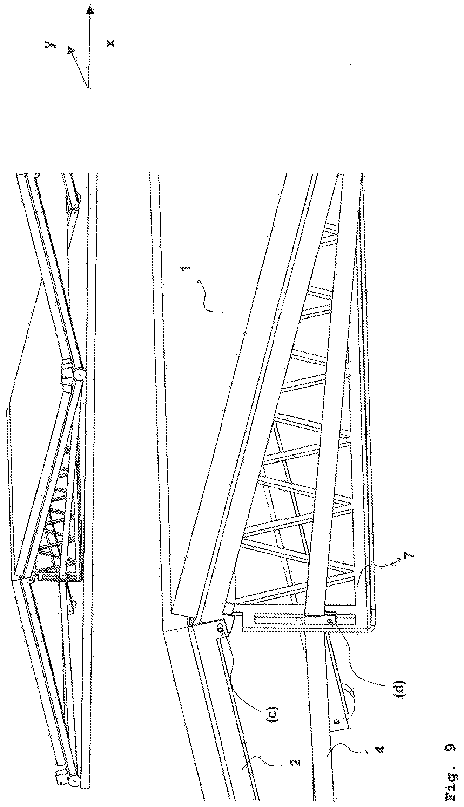

Figure 9 shows a spatial view underneath the structure to clearly show the various functions of the transverse partition (7). The transverse partition is necessary to create a stiff connection perpendicular to the unfolding direction (y), but also supports and guides the lower tensions compression element (4) if this is hinged at the center (point d).

The transverse partition in this configuration can serve as a shortener of the buckling length as well as an element to click and lock the unfolded system. If 2 adjacent PV systems are connected stiff together, the connecting element (8) can be connected to points c and d.

It is to be noticed that the invention is not limited to the embodiments discussed above. It is also possible to use flexible strips instead of using hinges between the panels or frameworks. It can also be possible to establish click connection in the hinges, when the panels or frameworks reach their final mutual angle.

Such and other variants will be clear to the skilled person and are to be considered inside the framework of the invention as stated in the appended claims.

### List with reference numbers

- 1.: PV- or solar panels:
- 2.: side edges of the solar panel:
- 3.: tension or compression element topside:
- 4.: tension or compression element bottom side:
- 5.: hinge point:
- 6.: wheel
- 7.: transverse partition
- 8.: Connecting element
- 9.: Rail:
- 10.: Support point
- 11.: Fixation point:
- 12.: Foundation or roof
- 13.: Load-bearing point in the support structure
- 14.: Gap

### List of used symbols

x longitudinal direction of PV-system
y transversal direction perpendicular to PV-system
□ Angle solar panel- foundation/roof
β Angle solar panel- foundation/roof
h Height of the truss structure
a displacement of mechanism in horizontal direction
b displacement of mechanism in vertical direction
c hinge point
d hinge point
I,II,III, IV numbering of some solar panels in the system
L distance of the unfolded system
L1 PV-panel length
B1 PV-panel width
L2 PV-panel length
B2 PV-panel width

## Claims

1. Photovoltaic (PV) system, suitable to be installed on a weak foundation (12) having load carrying points for carrying the PV system, for instance a roof (12), comprising several panels with solar cells and/or frameworks (1) suitable for the attachment of solar panels (1), wherein the panels and/or frameworks (1) are structurally load bearing components of the system,
wherein the system comprises a folded and unfolded configuration, and
wherein the panels and/or frameworks (1), both at the upper (3) side as well as the underside (4) are connected using tension or compression elements (3, 4), **characterized in that** in an unfolded configuration, a spatial truss structure with a large self-supporting span in the longitudinal direction (x) parallel on the load carrying points is created, wherein a bridge is formed between load carrying points (10, 13) of the foundation.

2. PV system according to claim 1, wherein the panels and/or frameworks (1) are mutually hingedly connected.

3. PV system according to claim 2, wherein the panels and/or frameworks (1) include two opposite side edges (2), wherein the system comprises at least two end panels and/or frameworks (1) and optionally consist of several intermediate panels and/or frameworks (1), whereby the intermediate panels and/or frameworks (1) hinged or not hinged are connected with a previous panel (1) and to a second edge (2) hinged or not hinged connected with a next panel or framework (1), and wherein the distal panels and/or frameworks (1) are merely connected to or the first or to the second edge (2) with a previous or next panel or framework (1).

4. PV system according to claim 3, wherein in the unfolded configuration the panels and/or frameworks (1) form an angle mutually with the adjacent solar panels (1).

5. PV system according to one of the previous claims, wherein the panels and/or frameworks (1) alternately on one first side edge (2) or on a second side edge (2) are provided with gliders, rollers or wheels (6).

6. PV system according to claim 5, wherein the panels and/or frameworks (1) alternately are provided with tension or compression elements (3, 4) on one first side edge (2) or on a second side edge (2) which create a connection from the first side edge (2) of a first panel (1) with the second side edge (2) of an adjacent next and/or an adjacent previous solar panel (1).

7. PV system according to claim 5 or 6, wherein the system is provided with extending rails (5) or guides (9), wherein, upon which or over which the sliders, wheels (6) or rollers can move.

8. PV system according to one of the previous claims, wherein the panels and/or frameworks (1) also contain wind shields or cover plates.

## Patentansprüche

1. Photovoltaikanlage (PV-Anlage), die für die Installation auf einem schwachen Fundament (12) geeignet ist, das Lasttragpunkte zum Tragen der PV-Anlage aufweist, beispielsweise ein Dach (12), umfassend mehrere Paneele mit Solarzellen und/oder Rahmen (1), die für die Befestigung von Solarpaneelen (1) geeignet sind, wobei die Paneele und/oder Rahmen (1) strukturell lasttragende Komponenten der Anlage sind, wobei die Anlage eine gefaltete und eine entfaltete Konfiguration umfasst, und wobei die Paneele und/oder Rahmen (1) sowohl an der Oberseite (3) als auch an der Unterseite (4) unter Verwendung von Zug- oder Druckelementen (3, 4) verbunden sind,
**dadurch gekennzeichnet, dass** in einer entfalteten Konfiguration eine räumliche Fachwerkstruktur mit einer großen selbsttragenden Spannweite in Längsrichtung (x) parallel zu den Lasttragpunkten hergestellt wird, wobei eine Brücke zwischen den Lasttragpunkten (10, 13) des Fundaments gebildet wird.

2. PV-Anlage nach Anspruch 1, wobei die Paneele und/oder Rahmen (1) gelenkig miteinander verbunden sind.

3. PV-Anlage nach Anspruch 2, wobei die Paneele und/oder Rahmen (1) zwei gegenüberliegende Seitenkanten (2) aufweisen, wobei die Anlage mindestens zwei Endpaneele und/oder -rahmen (1) umfasst und optional aus mehreren Zwischenpaneelen und/oder -rahmen (1) besteht, wobei die Zwischenpaneele und/oder -rahmen (1) gelenkig oder nicht gelenkig mit einem vorhergehenden Paneel (1) und an einer zweiten Kante (2) gelenkig oder nicht gelenkig mit einem nachfolgenden Paneel oder Rahmen (1) verbunden sind, und wobei die distalen Paneele und/oder Rahmen (1) lediglich an der ersten oder der zweiten Kante (2) mit einem vorhergehenden oder nachfolgenden Paneel oder Rahmen (1) verbunden sind.

4. PV-Anlage nach Anspruch 3, wobei die Paneele und/oder Rahmen (1) in der aufgeklappten Konfiguration einen Winkel zueinander mit den benachbarten Solarpaneelen (1) bilden.

5. PV-Anlage nach einem der vorstehenden Ansprüche, wobei die Paneele und/oder Rahmen (1) abwechselnd an einer ersten Seitenkante (2) oder an einer zweiten Seitenkante (2) mit Gleitern, Rollen oder Rädern (6) bereitgestellt sind.

6. PV-Anlage nach Anspruch 5, wobei die Paneele und/oder Rahmen (1) abwechselnd an einer ersten Seitenkante (2) oder an einer zweiten Seitenkante (2) mit Zug- oder Druckelementen (3, 4) bereitgestellt sind, die eine Verbindung von der ersten Seitenkante (2) eines ersten Paneels (1) mit der zweiten Seitenkante (2) eines benachbarten nächsten und/oder eines benachbarten vorherigen Solarpanels (1) herstellen.

7. PV-Anlage nach Anspruch 5 oder 6, wobei die Anlage mit verlängerten Schienen (5) oder Führungen (9) bereitgestellt ist, auf denen oder über denen sich die Schieber, Räder (6) oder Rollen bewegen können.

8. PV-Anlage nach einem der vorstehenden Ansprüche, wobei die Paneele und/oder Rahmen (1) auch Windschutzvorrichtungen oder Abdeckplatten enthalten.

## Revendications

1. Système photovoltaïque (PV) destiné à être installé sur une fondation faible (12) comportant des points de support de charge pour le système PV, par exemple un toit (12), comprenant plusieurs panneaux avec des cellules solaires et/ou des cadres (1) adaptés à la fixation de panneaux solaires (1), dans lequel les panneaux et/ou les cadres (1) sont des composants structurellement porteurs du système, dans lequel le système comprend une configuration pliée et dépliée, et dans lequel les panneaux et/ou les cadres (1), tant sur la face supérieure (3) que sur la face inférieure (4) sont reliés à l'aide d'éléments de tension ou de compression (3, 4), **caractérisé en ce que** dans une configuration dépliée, une structure spatiale en treillis avec une grande portée autoportante dans la direction longitudinale (x) parallèle aux points de support de charge est créée, dans laquelle un pont est formé entre les points de support de charge (10, 13) de la fondation.

2. Système PV selon la revendication 1, dans lequel les panneaux et/ou les cadres (1) sont mutuellement reliés par des charnières.

3. Système PV selon la revendication 2, dans lequel les panneaux et/ou les cadres (1) comprennent deux
bords latéraux opposés (2), dans lequel le système comprend au moins deux panneaux et/ou cadres d'extrémité (1) et éventuellement plusieurs panneaux et/ou cadres intermédiaires (1), les panneaux et/ou cadres intermédiaires (1) articulés ou non étant reliés à un panneau précédent (1) et à un second bord (2) articulé ou non relié à un panneau ou cadre suivant (1), et les panneaux et/ou cadres distaux (1) étant simplement reliés au premier ou au second bord (2) avec un panneau ou cadre précédent ou suivant (1).

4. Système PV selon la revendication 3, dans lequel, dans la configuration dépliée, les panneaux et/ou les cadres (1) forment un angle mutuellement avec les panneaux solaires adjacents (1).

5. Système PV selon l'une des revendications précédentes, dans lequel les panneaux et/ou les cadres (1) situés alternativement sur un premier bord latéral (2) ou sur un second bord latéral (2) sont munis d'éléments coulissants, de rouleaux ou de roues (6).

6. Système PV selon la revendication 5, dans lequel les panneaux et/ou les cadres (1) sont alternativement pourvus d'éléments de tension ou de compression (3, 4) sur un premier bord latéral (2) ou sur un second bord latéral (2) qui créent une connexion entre le premier bord latéral (2) d'un premier panneau (1) et le second bord latéral (2) d'un panneau solaire adjacent suivant et/ou d'un panneau solaire adjacent précédent (1).

7. Système PV selon la revendication 5 ou 6, dans lequel le système est pourvu de rails d'extension (5) ou de guides (9) dans lesquels, sur lesquels ou au-dessus desquels les éléments coulissants, les roues (6) ou les rouleaux peuvent se déplacer.

8. Système PV selon l'une des revendications précédentes, dans lequel les panneaux et/ou les cadres (1) contiennent également des pare-vent ou des plaques de recouvrement.
